# DEMANDE DE BREVET EUROPEEN

(11) **EP 1 503 054 A1**
(43) Date de publication de la demande: **02.02.2005**
(21) Numéro de dépôt: 04300476.1
(22) Date de dépôt: 26.07.2004
(51) Int. Cl.: F01N 3/08

(54) **Procédé et dispositif de traitement des hydrocarbures imbrulés issus d'un moteur à allumage commandé fonctionnant au gaz naturel, notamment pour véhicule automobile**

(30) Priorité: 30.07.2003 FR 0309369
(71) Demandeur: Peugeot Citroen Automobiles S.A., 78140 Vélizy Villacoublay (FR)
(72) Inventeur: LENDRESSE, Yvane, 92500, RUEIL MALMAISON (FR)
(74) Mandataire: De Cuenca, Emmanuel Jaime

(57) **Abrégé**

L'invention concerne un procédé de traitement des hydrocarbures imbrûlés, notamment de type méthanique, d'un moteur à allumage commandé (1) fonctionnant au gaz naturel notamment pour véhicule automobile, caractérisé en ce qu'il consiste, en dessous d'un certain seuil de température des gaz circulant dans la ligne d'échappement du moteur, à ioniser les hydrocarbures de type méthanique (2) en condition de mélange pauvre et, au-dessus de ce seuil, à traiter les hydrocarbures au moyen d'un convertisseur catalytique (3).

L'invention concerne également un dispositif d'application de ce procédé.

## Description

La présente invention concerne un procédé de traitement des hydrocarbures imbrûlés issus d'un moteur à allumage commandé fonctionnant au gaz naturel, destiné notamment à optimiser l'oxydation des composés de type méthanique lors du démarrage à froid du véhicule. Elle s'applique en particulier à un moteur de véhicule automobile.

Les polluants issus de la combustion d'un moteur à allumage commandé fonctionnant au gaz naturel sont majoritairement des hydrocarbures imbrûlés de type méthanique CH4, des oxydes d'azote NOx (monoxyde d'azote NO et dioxyde d'azote NO2) et des oxydes de carbone (monoxyde de carbone CO et dioxyde de carbone CO2). Afin de respecter les normes environnementales internationales, la maîtrise des émissions des hydrocarbures, du monoxyde de carbone et des oxydes d'azote est impérative aussi bien à neuf qu'en endurance et des technologies de post-traitement sont indispensables.

La maîtrise des émissions polluantes en phase gaz peut être obtenue par introduction dans la ligne d'échappement de catalyseurs spécifiques comme les catalyseurs trois-voies dits catalyseurs trifonctionnels, afin de respecter la réglementation relative aux oxydes d'azote NOx (fonction réductrice du catalyseur généralement obtenue par le rhodium), la réglementation relative au CO (fonction oxydante du catalyseur généralement obtenue par le platine) et la réglementation relative aux hydrocarbures imbrûlés (maîtrisés généralement par interaction avec le palladium).

Bien que l'utilisation du gaz naturel pour faire fonctionner un moteur à allumage commandé conduise à une réduction significative des émissions d'hydrocarbures imbrûlés à la sortie du moteur (entre 50 et 75% par rapport à un moteur essence à iso-cylindrée et sur des points moteur stabilisés), ces hydrocarbures émis sont de type méthanique et donc très difficilement oxydables du fait de leur forte stabilité physico-chimique. La conséquence directe de l'excellente stabilité de la molécule de méthane est que, à iso-formulation catalytique, la température de demi-conversion pour les hydrocarbures, c'est à dire la température à laquelle la moitié de ces hydrocarbures est oxydée, est augmentée de 200°C environ par rapport à la température de demi-conversion des hydrocarbures issus d'un même moteur fonctionnant à l'essence. De plus, les températures des gaz d'échappement sont de 20°C environ plus faibles pour un moteur fonctionnant au gaz naturel que pour un moteur à essence. L'oxydation des hydrocarbures imbrûlés issus d'un moteur à allumage commandé fonctionnant au gaz naturel a donc lieu à une température relativement élevée alors que les gaz d'échappement sortent du moteur à une température relativement basse.

La solution actuellement proposée par les spécialistes de la catalyse pour résoudre ce problème, consiste à augmenter de façon très significative la charge en métaux précieux des catalyseurs trois-voies (par exemple, d'environ 1,4 grammes de métaux par litre de catalyseur jusqu'à environ 10,6 grammes de métaux par litre de catalyseur pour les applications gaz naturel) pour abaisser la température de conversion des hydrocarbures de type méthanique et maintenir une performance compatible avec les futures réglementations concernant l'endurance.

Cependant, de tels catalyseurs ne commencent à fonctionner que lorsque la température des gaz atteint la température d'amorçage du catalyseur.

C'est pourquoi, l'invention a pour but un procédé de traitement des hydrocarbures imbrûlés, notamment de type méthanique, d'un moteur à allumage commandé fonctionnant au gaz naturel, notamment pour véhicule automobile, susceptible d'oxyder les hydrocarbures imbrûlés dès le démarrage à froid du moteur.

Selon l'invention, ce procédé consiste, en dessous d'un certain seuil de température des gaz d'échappement, à ioniser les hydrocarbures de type méthanique en condition de mélange pauvre et, au-dessus de ce seuil, à traiter les hydrocarbures au moyen d'un convertisseur catalytique.

De préférence, ce seuil correspond à la température de demi-conversion du méthane, c'est à dire la température à laquelle la moitié du méthane est oxydée. La température de demi-conversion du méthane est comprise entre 300 °C et 400 °C en fonction de la formulation catalytique dudit convertisseur.

L'invention a pour but également un dispositif d'application du procédé, comportant au moins un convertisseur catalytique, un capteur de température placé en amont de ce convertisseur, un dispositif d'ionisation de gaz et des moyens de contrôle de l'injection de carburant dans le moteur et du fonctionnement du dispositif d'ionisation en fonction de la température mesurée par le capteur.

Les moyens de contrôle commandent la mise en fonctionnement du dispositif d'ionisation et commandent l'injection de carburant dans le moteur de façon à ce que celui-ci fonctionne en mélange pauvre, lorsque la température mesurée par le capteur est en dessous d'un certain seuil.

Les moyens de contrôle commandent l'arrêt du dispositif d'ionisation et commandent l'injection de carburant dans le moteur de façon à ce que celui-ci fonctionne à la stoechiométrie lorsque la température mesurée par le capteur est au-dessus d'un certain seuil.

De préférence, ce seuil de température correspond à la température de demi-conversion du méthane.

Le dispositif peut comporter en outre des moyens, commandés par une vanne, pour la dérivation des gaz d'échappement afin que ceux-ci ne traversent pas le dispositif d'ionisation lorsque ce dernier n'est pas en fonctionnement.

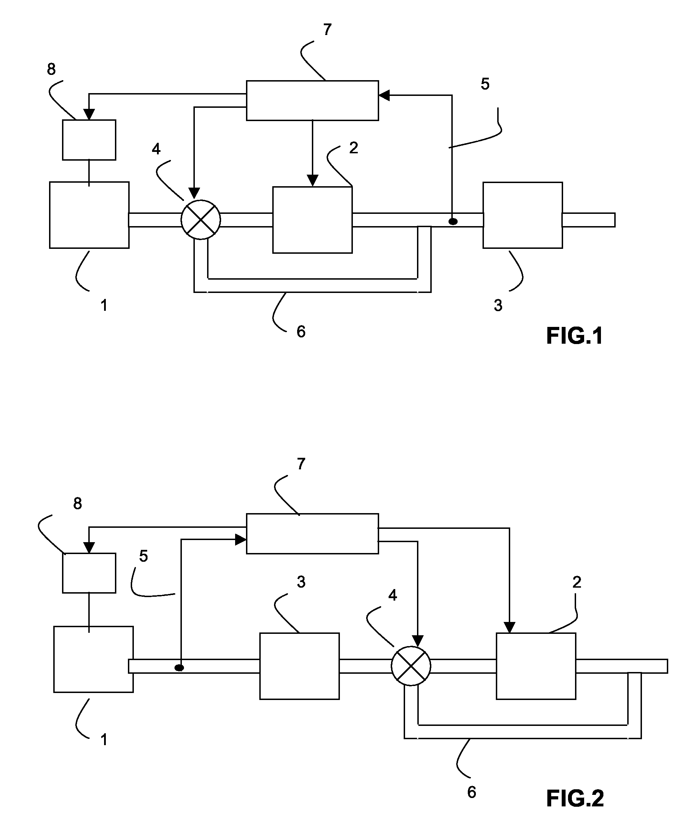

L'invention sera mieux comprise à l'aide des modes de réalisation représentés sur les figures 1 et 2, et donnés uniquement à titre d'exemples. Sur les deux figures, les éléments correspondants portent les mêmes repères.
La figure 1 représente un dispositif selon l'invention dans laquelle le dispositif d'ionisation est en amont du convertisseur catalytique.
La figure 2 est une figure analogue à la figure 1, mais dans laquelle le dispositif d'ionisation est en aval du convertisseur catalytique.

Le dispositif représenté sur la figure 1 comporte, dans la ligne d'échappement d'un moteur 1 à allumage commandé fonctionnant au gaz naturel, un dispositif d'ionisation de gaz 2 alimenté par un système haute tension délivrant des impulsions de courant modulables (amplitude, durée, fréquence), un catalyseur trois-voies 3 placé en aval du dispositif d'ionisation de gaz 2, un capteur de température 5 placé en amont du catalyseur trois-voies 3 ainsi qu'une ligne de dérivation 6 commandée par une vanne 4, susceptible de court-circuiter le dispositif d'ionisation 2. Un calculateur 7 reçoit des informations du capteur de température 5 et en sortie, est adapté pour piloter le fonctionnement du dispositif d'ionisation 2 et un système 8 d'injection de carburant dans le moteur 1.

Quand il est en fonctionnement, le dispositif d'ionisation 2, de préférence un réacteur à plasma non thermique, produit des décharges électriques dans les gaz d'échappement issus du moteur 1 et la collision entre les molécules des gaz d'échappement et les électrons énergétiques contenus dans ces décharges forme des espèces métastables, des radicaux et des ions très réactifs, et ceci sans élévation de la température du milieu réactionnel et donc des gaz d'échappement.

Les espèces métastables, radicaux et électrons fortement énergétiques produits dans la décharge sont des agents promoteurs de réactions chimiques d'oxydation, et permettent l'oxydation des hydrocarbures imbrûlés de type méthanique issus du moteur 1 en monoxyde ou dioxyde de carbone ou en espèces partiellement oxydées de type aldéhydes, cétones ou alcools. Cette oxydation est favorisée par une combustion du moteur en mélange pauvre. Plus précisément, ces réactions d'oxydation se font par activation de l'oxygène atomique par les décharges électriques générées dans le dispositif d'ionisation 2 et conduisent à la formation d'ozone, oxydant très puissant et très réactif. Cet ozone peut alors être consommé par les hydrocarbures de type méthanique pour former du monoxyde de carbone ou préférentiellement du dioxyde de carbone.

Lorsque le capteur de température 5 détecte une température inférieure à un certain seuil, par exemple inférieure à la température de demi-conversion du méthane , le calculateur 7 commande le système 8 d'injection du carburant dans le moteur afin que ce dernier fonctionne en mélange pauvre. Il commande également la mise en fonctionnement du dispositif d'ionisation 2 et l'ouverture de la vanne 4 de façon à ce que les gaz d'échappement issus du moteur 1 traversent le dispositif d'ionisation 2 et n'empruntent pas la dérivation 6.

Ainsi les hydrocarbures imbrûlés, notamment de type méthanique sont oxydés dans le dispositif d'ionisation.

Lorsque le capteur de température 5 détecte une température supérieure au seuil précité, le calculateur 7 commande le système 8 d'injection afin que ce dernier fonctionne à la stoechiométrie et commande l'arrêt du fonctionnement du dispositif d'ionisation 2. Ainsi les hydrocarbures imbrûlés issus du moteur 1 ne sont plus traités dans le dispositif d'ionisation 2. Ils sont oxydés dans le convertisseur catalytique 3 qui a atteint sa température d'amorçage. A ce moment, le calculateur 7 peut éventuellement commander aussi la vanne 4 afin que les gaz d'échappement ne traversent plus le dispositif d'ionisation 2 mais empruntent la dérivation 6. On évite ainsi les phénomènes de contre-pression générés par l'architecture du dispositif d'ionisation 2 à l'encontre de l'écoulement des gaz d'échappement.

La figure 2 est analogue à la figure 1 mais dans le cas de cette figure, le dispositif d'ionisation 2 est placé en aval du convertisseur catalytique 3. Le fonctionnement du dispositif est analogue à celui du dispositif de la figure 1.

L'invention présente donc l'avantage de traiter les hydrocarbures imbrûlés, notamment de type méthanique, même lorsque les gaz d'échappement sont froids.

Bien sûr d'autres modes de réalisation peuvent être envisagés.

Par exemple la dérivation 6 peut être supprimée.

Dans le cas où la dérivation 6 existe, une vanne 4' analogue à la vanne 4 peut être ajoutée à l'extrémité aval de la dérivation 6 pour éviter le refoulement des gaz dans la dérivation 6 quand celle-ci est court-circuitée ou dans le dispositif d'ionisation de gaz 2 lorsque celui-ci est court-circuité.

Le dispositif d'ionisation des gaz 2 peut être situé dans le même boîtier que le convertisseur catalytique 3. Il peut aussi être intégré à ce convertisseur 3, les décharges électriques étant crées au coeur du convertisseur.

## Revendications

1. Procédé de traitement des hydrocarbures imbrûlés, notamment de type méthanique, d'un moteur à allumage commandé fonctionnant au gaz naturel notamment pour véhicule automobile, **caractérisé en ce qu'**il consiste, en dessous d'un certain seuil de température des gaz circulant dans la ligne d'échappement du moteur, à ioniser les hydrocarbures de type méthanique en condition de mélange pauvre et, au-dessus de ce seuil, à traiter les hydrocarbures au moyen d'un convertisseur catalytique.

2. Procédé selon la revendication 1, **caractérisé en ce que** ledit seuil correspond à la température de demi-conversion du méthane.

3. Dispositif d'application du procédé selon l'une des revendications 1 ou 2, **caractérisé en ce qu'**il comporte au moins un convertisseur catalytique (3), un capteur de température (5) en amont de ce convertisseur et un dispositif d'ionisation de gaz (2) placés dans la ligne d'échappement du moteur ainsi que des moyens (7) de contrôle de l'injection de carburant dans le moteur et du fonctionnement du dispositif d'ionisation (2) en fonction de la température mesurée par le capteur (5).

4. Dispositif selon la revendication 3 **caractérisé en ce que** les moyens de contrôle (7) commandent la mise en fonctionnement du dispositif d'ionisation de gaz (2) et commandent l'injection de carburant dans le moteur de façon à ce que celui-ci fonctionne en mélange pauvre, lorsque la température mesurée par le capteur (5) est en dessous d'un certain seuil.

5. Dispositif selon l'une des revendications 3 ou 4, **caractérisée en ce que** les moyens de contrôle (7) commandent l'arrêt du dispositif d'ionisation (2) et commandent l'injection de carburant dans le moteur de façon à ce que celui-ci fonctionne à la stoechiométrie lorsque la température mesurée par le capteur (5) est au dessus d'un certain seuil.

6. Dispositif selon l'une quelconque des revendications 3 à 5, **caractérisé en ce que** ledit seuil de température correspond à la température de demi-conversion du méthane.

7. Dispositif selon l'une des revendications 3 à 6, **caractérisé en ce que** le dispositif d'ionisation de gaz (2) est placé en amont du convertisseur catalytique (3).

8. Dispositif selon l'une des revendications 3 à 6, **caractérisé en ce que** le dispositif d'ionisation de gaz (2) est placé en aval du convertisseur catalytique (3).

9. Dispositif selon l'une des revendications 3 à 6, **caractérisé en ce que** le dispositif d'ionisation de gaz (2) est intégré au convertisseur catalytique (3).

10. Dispositif selon l'une quelconque des revendications 3 à 8, **caractérisé en ce qu'**il comporte en outre des moyens (6) commandés par une vanne (4), pour la dérivation des gaz d'échappement afin que ceux-ci ne traversent pas le dispositif d'ionisation (2) lorsque ce dernier n'est pas en fonctionnement.

11. Dispositif selon la revendication 10, **caractérisé en ce que** les moyens (6) comportent en outre une deuxième vanne (4').
